# EUROPEAN PATENT APPLICATION

(11) **EP 2 270 738 A1**
(43) Date of publication of application: **05.01.2011**
(21) Application number: 10166792.1
(22) Date of filing: 22.06.2010
(51) Int. Cl.: G06Q 30/00

(54) **Systems and methods for providing an interface for purchasing ad slots in an executable program**

(30) Priority: 24.06.2009 US 220106 P
(71) Applicant: Uniloc USA, Inc., Irvine, CA 92612 (US)
(72) Inventor: Etchegoyen, Craig Stephen, Irvine, CA 92612 (US)
(74) Representative: Casbon, Paul Richard

(57) **Abstract**

A system for providing an interface for purchasing ad slots in an executable program operable at a plurality of clients. The system comprises a network interface disposed to receive data associated with an ad slot in the executable program and information associated with the plurality of clients operating the executable program, the plurality of clients each identified by a device fingerprint. The system also comprises a memory holding program instructions operable for determining a price for the ad slot based at least on the data and information associated with the plurality of clients and providing an interface for purchasing the ad slots. The interface identifies at least the executable program, the ad slot and the determined price.

## Description

This application claims priority to U.S. Provisional Application No. 61/220,106 which was filed June 24, 2009 and which is fully incorporated herein by reference.

### BACKGROUND

### Field of the Invention

The present disclosure relates to systems and methods for providing advertising in connection with an executable program operable at a plurality of clients and, more particularly, for providing an interface for advertisers to purchase ad slots.

### Description of the Related Art

A growing number of people, across all demographic categories, are shifting their attention from conventional media, such as television, radio and print, to the Internet. It is thus no surprise that advertising efforts have also followed this shift into the Internet.

One of the many advantages that the Internet offers over the conventional media is the ability to launch advertising campaigns in real-time and to more specifically reach a target audience at lower costs. In further contrast to the conventional media, a user's response to ads delivered over the Internet may be tracked in real-time and used to formulate future ad campaigns which may be relevant to the user's interests.

Many games and multi-player virtual reality environments now feature advertisements as a means to provide a real-world feel as well as to garner ad revenue. Early approaches to in-game advertising required a coordinated effort between advertisers and game developers because the advertisements were hard-coded into the games themselves. This required advertisers to formulate ad campaigns far in advance of a game launch. One obvious disadvantage of this approach is the inability to deliver time-sensitive ad campaigns, such as movie releases, or to change or modify the ads appearing in the game after the ad is launched.

Recent efforts have focused on providing dynamic in-game advertising, which do not require the ads to be hard-coded into the game. Instead, an advertising application is integrated into the game platform and the advertising application enables advertisements to be delivered remotely from the game platform. The advertising application permits a two-way interaction between the game platform and an ad server, in which information obtained from the player or the game may be transmitted to the advertising agency and used to formulate relevant ads to be delivered into the game.

The opportunities for advertising in games and other virtual reality environments are comparable to those in the real world. For example, common modes of advertising found in the real world, such as billboards, signs, commercials, and product placement in scenes, may also be programmed into games and virtual reality environments. Given the vast number of game titles and the immeasurable possibilities for in-game advertising, a need exists for advertisers to be able to identify, evaluate and compare the various in-game advertising options available to them.

Moreover, because in-game advertising typically involves collecting and storing information from a user or client device, there is a need to protect this information from hackers who may seek to steal and misuse this data. While it may not be possible to protect against all possible attacks, it would be desirable to increase the levels of security in applications that gather and transmit it so as to make such attacks less likely to succeed.

### SUMMARY

The methods and systems disclosed herein provide an improved and more secure method of providing dynamic advertising in games and other multi-player virtual reality environment by utilizing a device fingerprint to identify the target client device to which tailored advertisements may be delivered. One advantage of utilizing a device fingerprint is that sensitive information about a user cannot be ascertained from the device fingerprint and thus may be protected from unauthorized disclosure or hacking.

In one embodiment, a method is described for providing an interface for purchasing ad slots in an executable program operable at a plurality of clients. The executable program may be an interactive game or a multi-player virtual reality environment. The ads may be any one or a combination of text, audio, video and at least one programming routine that modifies the executable program running on the client device. For example, the ad may be a programming routine which interacts with the player or changes game plays, options or levels for the player.

In accordance with this embodiment, the method comprises receiving, at a server, data associated with an ad slot in the executable program. The data generally describes the parameters for the ad slot, such as the size of the ad that the ad slot is able to accommodate, the location or context in which the ad will be displayed when the executable program is being operated by the client, the ad type, such as text, audio, video or programming routine, and any other pertinent information or parameter relating to the ad that may be used to fill the ad slot. The method further comprises determining a price for the ad slot based at least on the data and information associated with one or more clients operating the executable program, the one or more clients each identified by a device fingerprint; and providing an interface for purchasing the ad slots, the interface identifying the executable program, the ad slot and the determined price.

In another embodiment, a method is described for offering for sale a plurality of ad slots in various executable programs operable on client devices. The method comprises providing an interface for purchasing the ad slots, the interface describing each ad slot, the executable program featuring the ad slot, and an initial purchase price. A plurality of bids to purchase the ad slot may be received from advertisers, the plurality of bids each indicating an offered purchase price. The purchase price may be the same or different than the initial purchased price indicated by the interface. A winner bid is selected from the plurality of bids received based on a predetermined criteria.

In a further embodiment, a system is described for serving ads to one or more client devices in connection with the operation of an executable program operating at the one or more client devices. The system comprises a network interface disposed to receive data associated with an ad slot in an executable program and information associated with the plurality of clients operating the executable program, the plurality of clients each identified by a device fingerprint. The system further comprises a memory holding program instructions operable for determining a price for the ad slot based at least on the data and information associated with the plurality of clients operating the executable program, the plurality of clients each identified by a device fingerprint; and providing an interface for purchasing the ad slots, the interface identifying the executable program, the ad slot and the determined price. A processor is in communication with the network interface and the memory, the processor configured for operating the program instructions.

In yet a further embodiment, tangible computer-readable media are provided having stored thereon, computer-executable instructions that, if executed by a computing device, cause the computing device to perform the methods disclosed herein. Server-side and client-side applications are separately provided.

A more complete understanding of methods and systems disclosed herein will be afforded to those skilled in the art, as well as a realization of additional advantages and objects thereof, by a consideration of the following detailed description. Reference will be made to the appended sheets of drawings which will first be described briefly.

### BRIEF DESCRIPTION OF THE DRAWINGS

FIG. 1 is a schematic diagram showing one embodiment of a system for providing an interface for purchasing ad slots in an executable program.

FIG. 2 is another schematic diagram showing another embodiment of a system for providing an interface for purchasing ad slots in an executable program.

FIG. 3 is a schematic diagram showing the various modules of an embodiment of the executable program.

FIG. 4 is a flow chart showing a process of dynamically serving ads to a client device in connection with the operation of an executable program.

Throughout the several figures and in the specification that follows, like element numerals are used to indicate like elements appearing in one or more of the figures.

### DETAILED DESCRIPTION

The methods and systems disclosed herein provide an improved and more secure method of providing dynamic advertising in games and other multi-player virtual reality environment by providing an interface for purchasing ad slots for an executable program and linking information pertinent to targeted marketing to a device fingerprint which uniquely identifies a client device. The methods and systems comprise both server-side and client-side components, and one of ordinary skill in the art will find that there are a variety of ways to design a client or server architecture. Therefore, the methods and systems disclosed herein are not limited to a specific client or server architecture, and encompass variations and modifications embodying he inventive systems and methods disclosed herein. An appreciation of the disclosure and many of the attendant advantages may be better understood by reference to the following detailed description of the preferred embodiments.

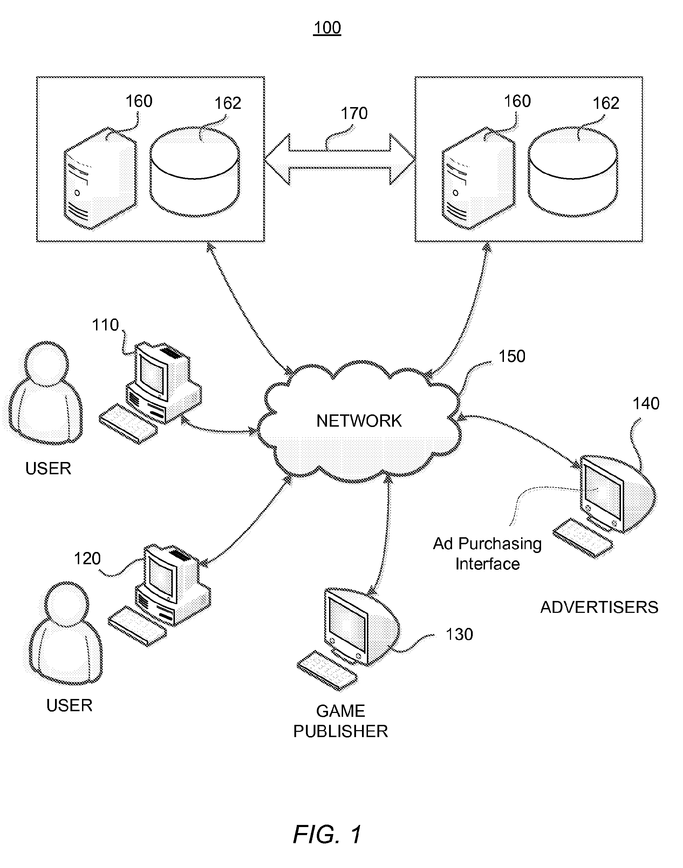

FIG. 1 illustrates one embodiment of a system 100 for providing an interface for purchasing ad slots in an executable program and dynamically serving ads occupying the ad slots to a plurality of clients.

The client devices 110, 120 operate an executable program, such as a game or other interactive program, that may reside at the each of the respective client devices 110, 120 a game server, or both. The client devices 110, 120 each generate and transmit to the ad server 170 an ad request and an associated device fingerprint uniquely identifying the respective client device. The ad server 170, in communication with a user information server 180, selects one or more ads responsive to the ad request and transmits ad rendering data so as to enable the ads to be displayed at the respective client devices 110, 120. The ad rendering may be performed by the client or a remotely located server (i.e., game server). Because the ad request is client device-specific, the ads displayed at each of the client devices 110, 120 may be different.

The client devices 110, 120 may be any device or machine capable of communicating with a computer network 150. Preferably, the client device has a processor that is operatively connected to a memory and a display to operate the executable program. Thus, suitable client devices include game consoles, personal desktop computers, portable laptop computers, server computers, tablet computers, personal digital assistants, mobile phones, wireless communication devices, and onboard vehicle computers.

The executable program operated by the client devices 110, 120 may be downloaded from a remotely-located server or encoded in a computer-readable media of a data storage device which, when loaded onto the client device, causes the client device to perform the client-side processes and outputs.

The network 150 may comprise a communications network, such as the Internet, a cellular communications network, a satellite communications network, a local area network, or some combination of these or other suitable networks. The network 150 enables client devices to communicate with a remotely-located ad server and allow for the exchange of data between the client devices and the ad server.

The ad server 170 is configured to communicate with the user information server 180 associated with a database 182 which stores associations between device fingerprints and information relating to ad requests and ad performance data. The ad server 170 may transmit the device fingerprint and associated information contained in the ad request to the user information server 180 for storage in a database 182. The database 182 contains associations between the device fingerprints and information relating to any one or more of the client device, a user operating the client device and the executable program running on the client device. The database 182 may further comprise historical information relating to the performance or user response to ads that have been displayed at the client device. This information is useful in determining the success or failures of certain types of ad campaigns in formulating future ad campaigns.

A game publisher 130 or other program publisher seeking to have advertisements displayed in connection with its program may submit a profile of its available ad slots to the ad server. The game publisher 130 may fill out a web form generated by the ad server 160 and accessible by the game publisher 130 over the network. The web form may request the game publisher to provide data or other suitable information describing the available ad slots, such as size, media type, subject matter, and the like.

The ad server 160 receives the ad slot profile from the game publisher 130 and includes pertinent information regarding the ad slot an ad purchasing interface 140, also generated by the ad server and accessible by advertisers 140 via the network. The advertisers may view and purchase available ad slots from the ad purchasing interface 140.

The ad server 160 may also determine a price for the ad slot based at least on the data and information associated with one or more clients operating the executable program. Although the embodiment is described with respect to the ad server determining the price for the ad slot, it is understood that the game publisher 130 may also determine the price for the ad slot and transmit this information to the ad server.

Advertisers 140 may access an ad purchasing interface 140 to view and purchase available ad slots and to upload the ad proposed for the ad slots. In one embodiment, the ad purchasing interface 140 may be a web form generated by the ad server 160 and displayed at a computer or other network connected device. The web form may provide a listing of available ad slots for various executable programs as described by the game publisher 130 for each of the executable programs. The listing may describe the available ad slots, the executable program in connection with which the ad slots are provided, the duration that the ad slots will display the advertisements, the subject matter of the executable program, price, and any other pertinent information relating to the ad slot as determined by the game publishes 130.

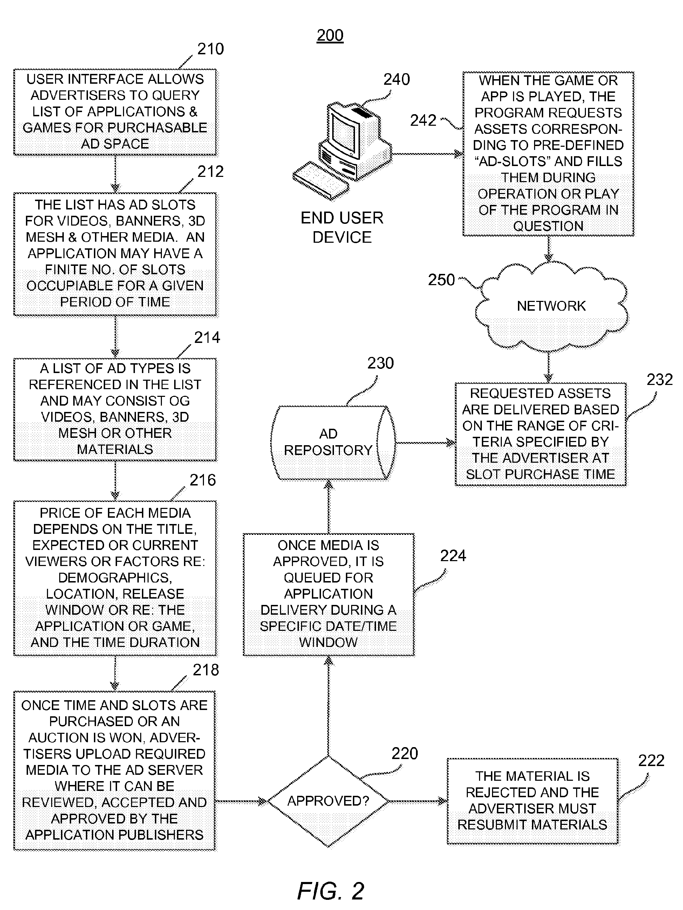

Although FIG. 1 depicts a system in which the executable program is downloaded onto the individual client devices, it is understood that the executable program may reside entirely in a game server or that components of the executable program may be shared between the individual clients and game server. For example, as further described in reference to FIG. 2, the game server and clients may share the program module to provide a coordinated multi-player virtual reality environment and the remaining ad module, device fingerprint module and ad performance data module may reside partly or entirely in the individual client devices.

FIG. 2 is another schematic diagram showing another embodiment of a system and method 200 for providing an interface for purchasing ad slots in an executable program.

At 210, advertisers visit a user interface which allows them to query a list of applications and games that ads can be purchased for. The user interface preferably further includes specific information relating to the ad slots available for each of the applications, such as size, type and location in which the ad slot will appear in the application. The user interface may further provide a search or sorting function such that advertisers may be able to refine their search to relevant ad slots. For example, a search function may enable the advertisers to sort through applications in accordance with the age range for its intended audience. This would enable advertisers for age-sensitive items, such as alcohol and cigarettes, to filter out ad slots which would not be suitable for the target audience, e.g., children's games or applications.

As described in 212, the list of ad slots may comprise videos, banners, 3d mesh and/or other media. An application may have a finite number of slots which may be occupied for a given time period or only at specified dates and times (e.g., pizza ads to be displayed at noon). Further provided in the list, as described in 214 is a list of ad types. Again, this may consist of videos, banners 3d mesh and/or other media.

The price of each media may be determined at 216. In one embodiment, the price of each ad slot may be dependent on the title in question, expected or current viewers and/or other factors pertaining to the application, such as target demographic, location, release window and duration of time. At 218, once the time and ad slots are purchased, or an auction is won, advertisers may upload the required media to the ad server where it can be reviewed, accepted and approved by the application publishers.

This approval process 220 allows application publishers to continue to retain control over the content that is published in connection with their application. If the advertisement is not approved 222, the advertiser may be instructed to resubmit the ad. Optionally, the advertiser may also be provided with an explanation as to why the ad was not approved, along with suggested changes to the advertisement. If, however, the advertisement is approved 224, then the media or ad is queued for delivery during the specified date/time window. The approved ads are stored in an ad repository 230 for delivery.

As further shown in FIG. 2, an end user device 240 is in communication with the ad repository 230 via a network 250. The end user device 240 may download or play a game or application and, at 242, request advertisements corresponding to the pre-defined ad slots and have the ad slots filed during the operation and/or play of the program. The ad repository 230 evaluates the ad request submitted by the end user device 240 and selects an appropriate advertisement to fill the ad slot. At 232, the requested assets are delivered based on the range of criteria specified by the advertiser at the slot purchase time.

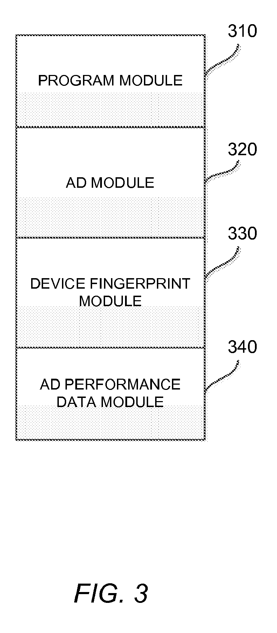

FIG. 3 depicts an embodiment of the executable program 300, including a program module 310 for providing the game environment, or aspects thereof, and an ad module 320 for generating and transmitting an ad request to a remotely-located ad server 160 through a communication network 150 and fetch one or more ads to be incorporated into the game environment for display at the client device. The executable program further includes a device fingerprint module 330, which collects one or more parameters relating to the client device and generates a device fingerprint that uniquely identifies the client device.

The program module 310 provides the game or virtual reality environment, which may be a single or multiple player game. The program module 310 may reside at the client device or may reside both at the client device and a remotely-located game server. The latter embodiment is appropriate for multi-player virtual reality games in which the game environment is rendered based on the collective input of other remotely-located players and therefore requires coordination between client-side and game server-side applications.

The ad module 320 is configured to generate and transmit an ad request to the ad server 170 via the communication network 150. The ad server 170 selects one or more ads responsive to the ad request to be incorporated into the game environment for display at the client device. The ad server 170 may further be associated with a database 180 which stores the information contained in the ad request and ad performance data in association with the device fingerprint.

The ad request may comprise information relating to any one or more of the client device, the user operating the client device and the executable program running on the client device. The purpose of the ad request is to provide sufficient information to enable an ad server to select appropriate ads that are appropriately matched with a user's demographic, preferences or interests. For example, while an ad for an upcoming release of an R-rated action movie may appropriate for a target audience comprising males, ages 18-36, it would not be appropriate for a target audience of young children, ages 12 and under.

Information relating to the client device may include information relating to the hardware or software components of the client device, any peripheral devices attached to the client device, and/or performance characteristics relating thereto. Such information may include, for example, type of device (i.e., personal computers, game consoles, handheld mobile devices), processor speed, available memory, resident software, and any other information characterizing the client device of components of the client device as would be relevant in the selection of an appropriate ad. For example, an ad that requires high bandwidth and processing capacity may not be suitable for client devices that have more limited bandwidth and processing capacity.

Information relating to the user operating the client device may include, for example, sex, age, income, education level, geographic location, and any other information which an advertiser would consider relevant to determining its target audience. Highly sensitive information regarding the user is not required since the device fingerprint accomplishes the function of uniquely identifying the client device that is to receive the ads and also associating the particular characteristics and preferences of a user operating the client device with the client device itself. Thus, the user need not input sensitive information such as social security number, credit card information, address, and so forth. The device fingerprint takes the place of such uniquely identifying information.

Information relating to the executable program may include features of the program itself, such as title, revision date, creation date, publisher game rating, etc. Information relating to the user's interactions or plays on the program, such as game state, game plays or levels completed, game scores, characteristics of avatars in the game, total playing time, average playing time, and other relevant information as it relates to the game or avatar in the game.

The device fingerprint module 330, which collects one or more parameters relating to the client device and generates a device fingerprint that uniquely identifies the client device. In a preferred embodiment, the device fingerprint module 330 collects identifying information regarding the client device and/or any software on the client device.

The device fingerprint module 330 may include a registration routine that collects information regarding the client device by checking a number of parameters which are expected to be unique to the client device environment. The parameters checked may include, for example, hard disk volume name, user name, device name, user password, hard disc initialization date, etc. The collected information may include information that identifies the hardware comprising the platform on which the web browser runs, such as, for example, CPU number, or unique parameters associated with the firmware in use. The collected information may further include system configuration information, such as amount of memory, type of processor, software or operating system serial number, etc. in the alternative, or in addition, the parameters may checked may include virtual machine specifications. Examples of virtual machine specifications may include, but are not limited to, information relating to virtual processors, virtual BIOS, virtual memory, virtual graphics, virtual IDE drives, virtual SCSI drives, virtual PCI slots, virtual floppy drives, virtual serial (COM) ports, virtual parallel (LPT) ports, virtual key board, virtual mouse and drawing tablets, virtual Ethernet card, virtual networking, virtual sound adapter, etc.

Based on the collected information, the device fingerprint module 330 may generate a device fingerprint that is unique for the client device. The device fingerprint may be generated using a combination of user-configurable and non-user-configurable machine parameters as input to a process that results in the device fingerprint, which may be expressed in digital data as a binary number. Each machine parameter is data determined by a hardware component, software component, or data component specific to the device that the unique identifier pertains to. Machine parameters may be selected based on the target device system configuration such that the resulting device fingerprint has a very high probability (e.g., greater than 99.999%) of being unique to the target device. In addition, the machine parameters may be selected such that the device fingerprint includes at least a stable unique portion up to and including the entire identifier that has a very high probability of remaining unchanged during normal operation of the target device. Thus, the resulting device fingerprint should be highly specific, unique, reproducible and stable as a result of properly selecting the machine parameters.

The device fingerprint module 330 may also operate on the collected parameters with one or more algorithms to generate the device fingerprint. This process may include at least one irreversible transformation, such as, for example, a cryptographic hash function, such that the input machine parameters cannot be derived from the resulting device fingerprint. Each device fingerprint, to a very high degree of certainty, cannot be generated except by the suitably configured application operating or otherwise having had access to the same field security device for which the device fingerprint was first generated. Conversely, each identifier, again to a very high degree of certainty, can be successfully reproduced by the suitably configured application operating or otherwise having access to the same field security device on which the identifier was first generated.

The device fingerprint module 330 may operate by performing a system scan to determine a present configuration of the field security device. The application may then select the machine parameters to be used as input for generating the unique device fingerprint. Selection of parameters may vary depending on the system configuration. Once the parameters are selected, the application may generate the identifier.

Further, generating the device fingerprint may also be described as generating a device fingerprint and may entail the sampling of physical, non-user configurable properties as well as a variety of additional parameters such as uniquely generated hashes and time sensitive values. Physical device parameters available for sampling may include, for example, unique manufacturer characteristics, carbon and silicone degradation and small device failures.

In addition to the chip benchmarking and degradation measurements, the process for generating a device fingerprint may include measuring physical, non-user-configurable characteristics of disk drives and solid state memory devices. Each data storage device has a large variety of damage and unusable data sectors that are nearly unique to each physical unit. The ability to measure and compare values for damaged sectors and data storage failures provides a method for identifying storage devices.

Device parameter sampling, damage measurement and chip benchmarking make up just a part of device fingerprinting technologies described herein. These tools may be further extended by the use of complex encryption algorithms to convolute the device fingerprint values during transmission and comparisons. Such encryption processes may be used in conjunction with random sampling and key generations.

An ad performance module 340 may optionally be further included in the executable program. The ad performance module 340 tracks and collects ad performance data relating to a user's response to the ad. Advertisers may evaluate ad performance data to determine the success of its advertisements and to further refine the advertisements or redefine the target audience receiving the ads.

Thus, ad performance data may include an identification of the ad displayed at the client device and any data indicative of a user's response, or lack thereof, to an advertisement, such as the angle or amount of time the ads are displayed at the client device, whether the user visited a website and/or purchased goods and services advertised in the ad, and any other input by the user to the ads displayed at the client device, both during and subsequent to the display of the ad.

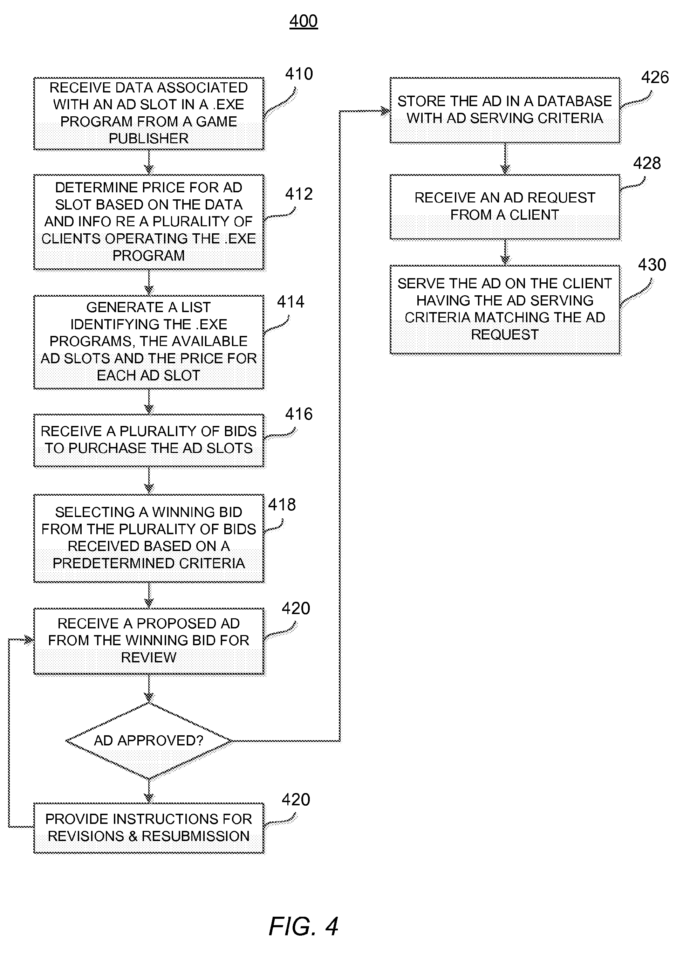

FIG. 4 is a flow chart showing a process 400 of dynamically serving ads to a client device in connection with the operation of an executable program.

At 410, an ad server receives data associated with an ad slot in an executable program from a game publisher. This data may comprise, for example, ad size, ad type and ad placement in the executable program. This data may also comprise relevant descriptors for the executable program or ad slot to better allow the ad server to determine the appropriate target demographic, e.g., a banner ad in a video game targeted for girls ages 8-12. This will allow advertisers to better determine whether a specific ad slot would be appropriate for their ads.

At 412, the price for the ad slot may be determined based on the data received from the game publisher and also on information associated with a plurality of clients operating the executable program, such as information relating to the client device, a user operating a client device and/or the executable program, as more fully described in reference to FIG. 3. Alternatively, the price for the ad slot may be fixed by the game publisher.

At 414, a list identifying the executable programs, the available ad slots and the price for each ad slot may be generated. This list may be presented via a ad purchasing interface that advertisers may view, search or sort through in order to make their selections.

The advertisers may bid on one or more of the ad slots and, at 416, a plurality of bids may be entertained for a given ad slot. At 418, a winning bid may be selected based on predetermined criteria. In one embodiment, the predetermined criteria may be a highest price offered among the plurality of bids. The holder of the winning bid is then notified and instructed to submit the ad to the ad server, preferably by uploading the ad via the network.

At 420, the proposed ad from the winning bids received for review. The ad is reviewed to determine if it fits the criteria indicated by the ad slot data. The review process may be performed by the ad server or the game publisher for the executable program for which the ad is intended.

At 422, a determination is made and communicated to the advertiser as to whether or not the ad is approved for its intended ad slot. If the ad is not approved, then at 424, further instructions may be provided to the advertiser for revising or resubmitting the ad. If the ad is approved, then at 426, the ad server stores the ad in the ad database along with the appropriate serving criteria.

At 428, the ad server may receive an ad request from a client device operating the executable program. The ad request is preferably associated with a device fingerprint that uniquely identifies the client device and comprises information relating to any one or more of the client device, a user operating the client device or the executable program running on the client device. The information contained in the ad request is stored in a user information database. The ad server may access the user information database and select an advertisement having serving criteria that best matches information corresponding to a device fingerprint. The selected ads may be determined based on desired match criteria. Certain ads may require a match with information associated with a client fingerprint of 25%, 50%, 75% or more, depending on the advertiser's specified preference for a given ad. At 430, the selected ad is served on the client having ad serving criteria matching the ad request by the client device.

In accordance with aspects of the embodiments described herein, one or more of the techniques and methodologies described herein may be performed by embedded applications, platforms, or systems. The methods described herein may be performed by a general-purpose computer system and/or an embedded application or component of a special-purpose apparatus (e.g., traffic controller, traffic signal, surveillance cameras, sensors, detectors, vehicles, vehicle navigation systems, mobile phones, PDAs, etc.).

For example, in one embodiment, the special-purpose device comprises an embedded platform running an embedded Linux operating system (OS) or the like. For example, the unique device identifier or fingerprint for the special-purpose device may be created by collecting and using one or more of the following information: machine model; processor model; processor details; processor speed; memory model; memory total; network model of each Ethernet interface; network MAC address of each Ethernet interface; BlackBox model (e.g., any Flash device); BlackBox serial (e.g., using Dallas Silicone Serial DS-2401 chipset or the like); OS install date; nonce value; nonce time of day; and any other predefined hardware information stored (optionally encrypted) in EEPROM or the like; any variations/combinations thereof.

Having thus described preferred embodiments for the methods and systems for serving dynamic advertisements in a game or virtual reality environment, it should be apparent to those skilled in the art that certain advantages of the within methods and systems have been achieved. It should also be appreciated that various modifications, adaptations, and alternative embodiments thereof may be made without departing from the scope and spirit of the present technology. The following claims define the scope of what is claimed.

As used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (e.g., data from one component interacting with another component in a local system, distributed system, and/or across a network such as the Internet with other systems by way of the signal).

It is understood that the specific order or hierarchy of steps in the processes disclosed herein in an example of exemplary approaches. Based upon design preferences, it is understood that the specific order or hierarchy of steps in the processes may be rearranged while remaining within the scope of the present disclosure. The accompanying method claims present elements of the various steps in sample order, and are not meant to be limited to the specific order or hierarchy presented.

Moreover, various aspects or features described herein can be implemented as a method, apparatus, or article of manufacture using standard programming and/or engineering techniques. The term "article of manufacture" as used herein is intended to encompass a computer program accessible from any computer-readable device, carrier, or media. For example, computer-readable media can include but are not limited to magnetic storage devices (e.g., hard disk, floppy disk, magnetic strips, etc.), optical discs (e.g., compact disc (CD), digital versatile disc (DVD), etc.), smart cards, and flash memory devices (e.g., Erasable Programmable Read Only Memory (EPROM), card, stick, key drive, etc.). Additionally, various storage media described herein can represent one or more devices and/or other machine-readable media for storing information. The term "machine-readable medium" can include, without being limited to, wireless channels and various other media capable of storing, containing, and/or carrying instruction(s) and/or data.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

## Claims

1. A method for providing an interface for purchasing ad slots in an executable program operable at a plurality of clients, the method comprising:
receiving, at a server, data associated with an ad slot in the executable program;
determining a price for the ad slot based at least on the data and information associated with one or more clients operating the executable program, the one or more clients each identified by a device fingerprint; and
providing an interface for purchasing the ad slots, the interface identifying the executable program, the ad slot and the determined price.

2. The method of claim 1, wherein the information associated with the plurality of clients operating the executable device is stored in a memory in association with the device fingerprint.

3. The method of claim 2, wherein the information relates to any one or more of the client device, a user operating the client device and the executable program.

4. The method of claim 1, wherein the price is a minimum auction price.

5. The method of claim 4, further comprising receiving a plurality of bids to purchase the ad slot.

6. The method of claim 5, further comprising selecting one of the plurality of bids based on the selected bid being the highest price offered among the plurality of bids.

7. The method of claim 1, wherein the price is a set purchase price.

8. The method of claim 7, further comprising receiving an offer to purchase the ad slot at the set purchase price.

9. The method of claim 1, wherein the data associated with the ad slot comprises ad size, ad type, and ad placement in the executable program.

10. The method of claim 1, further comprising accepting a purchase for at least one of the plurality of ad spots.

11. The method of claim 10, further comprising uploading an ad intended for the purchased ad slot.

12. The method of claim 11, further comprising causing the uploaded ad to be reviewed to determine acceptance or rejection of the ad in connection with the purchased ad slot.

13. The method of claim 12, further comprising, upon determining acceptance of the ad, storing the ad in an ad database for delivery.

14. A method for offering for sale a plurality of ad slots in various executable programs operable on client devices, the method comprising:
providing an interface for purchasing the ad slots, the interface describing each ad slot, the executable program featuring the ad slot, and an initial purchase price;
receiving a plurality of bids to purchase the ad slot, the plurality of bids each indicating an offered purchase price that is the same or different from the initial purchased price; and
selecting a winning bid from the plurality of bids received based on a predetermined criteria.

15. The method of claim 14, wherein the interface lists one or more of a title of the executable program, a media type for the ad slot, a duration for the ad slot, and a schedule for the ad slot.
